# EUROPÄISCHE PATENTSCHRIFT

(11) **EP 1 366 952 B1**
(45) Veröffentlichungstag und Bekanntmachung des Hinweises auf die Patenterteilung: **20.12.2006**
(21) Anmeldenummer: 03010535.7
(22) Anmeldetag: 10.05.2003
(51) Int. Cl.: B60N 3/10

(54) **Halter für einen Getränkebehälter**
Holder for a beverage container
Support pour un récipient de boisson

(30) Priorität: 28.05.2002 DE 20208253 U
(43) Veröffentlichungstag der Anmeldung: 03.12.2003
(73) Patentinhaber: fischer automotive systems GmbH, 72160 Horb (DE)
(72) Erfinder: Schaal, Falk, 72275 Alpirsbach (DE)

(56) Entgegenhaltungen:
- EP-A- 0 800 954
- DE-A- 19 529 877
- DE-A- 19 724 599
- DE-U- 29 920 019
- US-A- 2 215 411

## Beschreibung

Die Erfindung betrifft einen Halter für einen Getränkebehälter mit den Merkmalen des Oberbegriffs des Anspruchs 1.

Aus dem Stand der Technik sind eine Vielzahl derartiger Halter mit einer topfförmigen Behälteraufnahme für Tassen, Becher, Getränkedosen, Flaschen oder dgl. bekannt. Die bekannten Halter weisen ein oder mehrere, zum Teil über den Umfang verteilt angeordnete Haltebacken oder dgl. auf. Diese ragen in das Innere der topfförmigen Behälteraufnahme hinein und weisen schräge und/oder gerundete Gleitflächen auf. Aufgrund einer Federung können die Haltebacken von der Umfangsfläche eines Getränkebehälters radial weggedrückt werden und geben durch Klemmung dem Getränkebehälter Halt. Ein derartiger Halter ist beispielsweise in DE 296 06 583.8 beschrieben. Die entsprechende Klemmeinrichtung weist Haltebacken auf, die jeweils einzeln mit einem Schwenk- und Linearlager am Getränkehalter befestigt sind. Als Federelement wird ein elastischer Kreisring oder ein Band vorgeschlagen, das die Behälteraufnahme umgreift. Eine derartige Klemmeinrichtung erfordert jedoch einen erheblichen Montageaufwand.

Weiterhin ist aus der Druckschrift DE 195 29 877 A1 ein topfförmiger Halter mit radial wegdrückbaren Haltebacken bekannt, bei denen die Haltebacken und die Federelemente einstückig an einem Trägerteil angeordnet sind. Das Trägerteil umfasst den Boden der Behälteraufnahme.

Der Erfindung liegt die Aufgabe zugrunde, einen Halter für einen Getränkebehälter zu schaffen, der mit möglichst geringen Aufwand insbesondere für die Klemmeinrichtung herstellbar ist.

Diese Aufgabe wird erfindungsgemäß durch die Merkmale des Anspruchs 1 gelöst. Die Klemmeinrichtung besteht aus einem Trägerteil, an das einstückig Federelemente angeordnet sind, die die Haltebacken tragen. Das Trägerteil wird am Boden der Behälteraufnahme befestigt. Bei der Montage wird das Trägerteil wird von unten über die Behälteraufnahme gestülpt, wobei sich die Haltebacken federnd aufspreizen, bis sie in die Öffnungen der Behälteraufnahme eingreifen.

In einer bevorzugten Ausführung sind Trägerteil, Federelemente und Haltebacken einstückig ausgeführt. Das Trägerteil kann aus Blech oder Kunststoff hergestellt sein und bildet die Haltebacken durch federnde, mehrfach abgewinkelte Laschen, die rechtwinklig an einem beispielsweise tellerförmigen Basisteil angeordnet sind. Der gesamte Halter besteht damit lediglich aus zwei einfachen Bauteilen.

Für eine einfache Befestigung sieht die Erfindung Ausführung vor, dass die Behälteraufnahme an seinem Boden einen hinterschnittenen Zapfen aufweist an dem das Trägerteil mittels eines Schlüssellochs befestigt wird. Bei der Montage wird das Trägerteil derart über die Behälteraufnahme gestülpt, dass der Zapfen durch das Schlüsselloch geführt wird. Durch eine Verdrehung des Trägerteils gegenüber der Behälteraufnahme greift der Zapfen hinter das Trägerteil. Gleichzeitig greifen die Haltebacken in die Öffnungen der Behälteraufnahme, wodurch ein Zurückdrehen verhindert wird.

Zur Verbesserung der optischen Anmutung und/oder der Gleit- und Halteeigenschaften der Haltebacken können an diesen Kunststoffaufsätze oder eine Beschichtung angebracht sein.

Die Erfindung wird nachfolgend anhand zweier in der Zeichnung dargestellter Ausführungsbeispiele näher erläutert. Es zeigen:
- Figur 1und 2: den Halter in perspektivischen Darstellungen sowie
- Figur 3: eine perspektivische Schnittdarstellung eines weiteren Trägerteils.

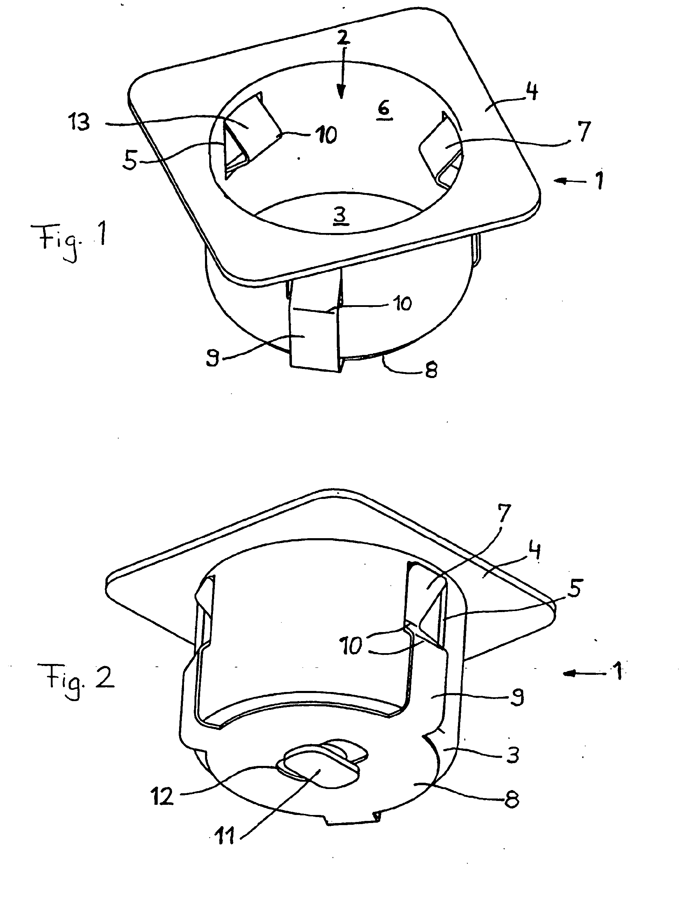

Der in Figur 1 und 2 dargestellte Halter 1 ist zum Einbau in ein Kraftfahrzeug vorgesehen und kann zum Halten von Getränkebehältern (nicht dargestellt) wie beispielsweise Tassen, Becher, Getränkedosen, Flaschen oder dgl. verwendet werden. Er weist eine topfförmige Behälteraufnahme 2 mit Boden 3 auf. An einer offenen Oberseite der Behälteraufnahme 2 geht der Halter 1 einstückig in eine flanschartige Blende 4 über, die zum Verschließen einer Einbauöffnung für den Halter 1 im Kraftfahrzeug vorgesehen ist. In Öffnungen 5 der inneren Umfangswand 6 der Behälteraufnahme 2 sind drei Haltebacken 7 über den Umfang verteilt angeordnet. Das Trägerteil 8 aus Blech oder Kunststoff umgreift von der Seite des Bodens 3 die Behälteraufnahme 2. Es besteht aus einer tellerförmigen Basis, die am Boden 3 der Behälteraufnahme 2 anliegt, und drei davon rechtwinklig abstehenden Laschen 9. Die Haltebacken 7 werden von den Laschen durch eine zweifache Abwinkelung 10 gebildet. Durch die Ausprägung als Laschen 9 sorgen diese für eine federnde Verbindung der Haltebacken 7 mit dem Trägerteil 8.

Trägerteil 8 und Behälteraufnahme 2 sind durch einen hinterschnittenen Zapfen 11 am Boden 3 der Behälteraufnahme 2 sowie einem Schlüsselloch 12 im Trägerteil 8 verbunden. Bei der Montage wird das Trägerteil 8 in einer gegenüber der dargestellten Position um 90° verdrehten Orientierung über die Behälteraufnahme 2 gestülpt. Dabei spreizen sich die Laschen 9 mit den Haltebacken 7 bedingt durch die schrägen Gleitflächen 13 federnd auf, greifen jedoch zunächst nicht in die Öffnungen 5 ein. Das Trägerteil 8 wird soweit aufgeschoben, bis der Zapfen 11 durch das Schlüsselloch 12 dringt. Anschließend wird das Trägerteil 8 in die dargestellte Position gedreht, wobei der Zapfen 11 hinter das Trägerteil 8 greift. Gleichzeitig schnappen die Haltebacken 7 in die Öffnungen 5 ein, wodurch ein Zurückdrehen verhindert wird. Ohne den Erfindungsgedanken zu verlassen, kann die Befestigung des Trägerteils 8 an der Behälteraufnahme 2 auch durch eine Klipsverbindung erfolgen. Dazu könnte beispielsweise die Behälteraufnahme 2 mit einer oder mehreren Rastnasen (nicht dargestellt) versehen sein, die hinter eine Kante des Trägerteils 8 greifen.

Wird ein Getränkebehälter (nicht dargestellt) mit einem der Behälteraufnahme 2 in etwa entsprechenden Außendurchmesser in die Behälteraufnahme 2 eingebracht, so werden die Haltebacken 7 aufgrund ihrer schräg gestellten Gleitflächen 13 in etwa radial bezogen auf die Behälteraufnahme 2 verdrängt bis sie am Umfang des Getränkebehälters anliegen. Die Federwirkung wird durch ein elastisches Verbiegen der Laschen 9 erreicht. Hierdurch wird der Getränkebehälter klemmend gehalten.

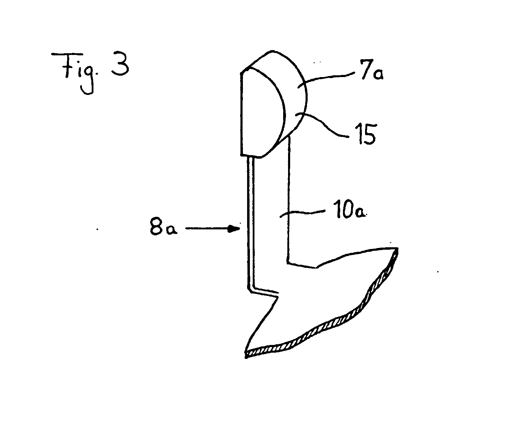

In Figur 3 ist ein Kunststoffaufsatz 15 als zusätzliches Bauteil des Trägerteils 8a dargestellt. Es bildet die Haltebacke 7a und weist gegenüber den zuvor dargestellten Haltebacken 7 eine verbesserte optische Anmutung sowie ein besseres Gleit- und Klemmverhalten auf. Der Kunststoffaufsatz wird vor dem Fügen von Trägerteil 8a auf die Behälteraufnahme 2 montiert. Die Verbindung zwischen der Lasche 9 und dem Kunststoffaufsatz 15 kann beispielsweise durch eine Klipsverbindung (nicht dargestellt) erfolgen. Dazu könnte beispielsweise eine an dem Kunststoffaufsatz 15 angebrachte Rastnase in eine Aussparung der Lasche 9 eingreifen.

## Patentansprüche

1. Halter (1), mit einer einen Boden (3) aufweisenden Behälteraufnahme (2) für einen Getränkebehälter und einer Klemmeinrichtung mit radial wegdrückbaren und in die Behälteraufnahme (2) hineinragenden Haltebacken (7), die an Federelementen (9) angeordnet sind, wobei die Federelemente (9) einstückig an einem Trägerteil (8) angeordnet sind, das am Boden (3) der Behälteraufnahme (2) befestigt ist, **dadurch gekennzeichnet, dass** die Behälteraufnahme (2) an seinem Boden (3) einen hinterschnittenen Zapfen (11) aufweist an dem das ein Schlüsselloch (12) aufweisende Trägerteil (8) befestigt ist.

2. Halter nach Anspruch 1, **dadurch gekennzeichnet, dass** die Haltebacken (7) einstückig an den Federelementen (9) angeformt sind.

3. Halter nach Anspruch 1, **dadurch gekennzeichnet, dass** an den Haltebacken (7) Kunststoffaufsätze (15) angebracht sind.

## Claims

1. Holder (1) having a container receptacle (2), comprising a base (3), for a drinks container and having a clamping device comprising holding jaws (7), which protrude into the container receptacle (2), can be pushed back radially and are arranged on spring elements (9), the spring elements (9) being integrally arranged on a carrier part (8), which is fastened to the base (3) of the container receptacle (2), **characterised in that** the container receptacle (2) has, on its base (3), an undercut projection (11), to which the carrier part (8) having a keyhole (12) is fastened.

2. Holder according to claim 1, **characterised in that** the holding jaws (7) are integrally formed on the spring elements (9).

3. Holder according to claim 1, **characterised in that** plastics head-pieces (15) are attached to the holding jaws (7).

## Revendications

1. Support (1) comprenant un réceptacle (2) avec un fond (3) pour un contenant de boisson et un dispositif de serrage avec des mâchoires (7) pouvant être écartées radialement et pénétrant dans le réceptacle (2), lesquelles sont placées sur des éléments à ressort (9), lesdits éléments à ressort (9) faisant corps avec une partie de support (8) fixée au fond (3) du réceptacle (2), **caractérisé en ce que** le réceptacle (2) présente au niveau de son fond (3) un tenon (11) en contre-dépouille auquel est fixée la partie de support (8) présentant un trou de clavetage (12).

2. Support selon la revendication 1, **caractérisé en ce que** les mâchoires (7) et les éléments à ressort (9) sont d'un seul tenant.

3. Support selon la revendication 1, **caractérisé en ce que** des garnitures (15) en matière plastique sont fixées sur les mâchoires (7).
